Europäisches Patentamt

European Patent Office

Office européen des brevets

(11) Veröffentlichungsnummer: **0 184 651**
**B1**

(12) **EUROPÄISCHE PATENTSCHRIFT**

(45) Veröffentlichungstag der Patentschrift:
01.03.89

(21) Anmeldenummer: 85113579.8

(22) Anmeldetag: 25.10.85

(51) Int. Cl.⁴: **B 29 D 29/06**, B 65 H 59/00

(54) Verfahren zum Betreiben einer Herstelleinrichtung für Fördergurte.

(30) Priorität: 01.12.84 DE 3443889

(43) Veröffentlichungstag der Anmeldung:
18.06.86 Patentblatt 86/25

(45) Bekanntmachung des Hinweises auf die Patenterteilung:
01.03.89 Patentblatt 89/9

(84) Benannte Vertragsstaaten:
AT BE CH DE FR GB IT LI LU NL SE

(56) Entgegenhaltungen:
DE-A- 2 254 027
DE-B- 1 282 912
DE-B- 1 579 102
GB-A- 303 718
US-A- 1 582 023
US-A- 2 745 134
US-A- 3 871 205

(73) Patentinhaber: **Continental Aktiengesellschaft,
Königsworther Platz 1, D-3000 Hannover 1 (DE)**

(72) Erfinder: **Specht, Hans, Falkenstrasse 6,
D-3410 Northeim (DE)**
Erfinder: **Käse, Walter, Hespenkamp 1,
D-3000 Hannover 21 (DE)**

## Beschreibung

Die Erfindung bezieht sich auf Verfahren zum Betreiben einer Herstelleinrichtung für Fördergurte aus Gummi oder gummiähnlichen Kunststoffen mit parallel zueinander ohne gegenseitige Berührung in Längsrichtung eingebetteten draht- oder seilartigen Festigkeitsträgern, mit die Festigkeitsträger in einem längeren Bereich innerhalb der Einrichtung gemeinsam unter einer Zugspannung haltenden Mitteln und mit einer Vielzahl von zu Eingang dieses Bereiches vorgesehenen mit Druckmittel beaufschlagbaren Spannzylindern, deren unter der Wirkung des Druckmitteldruckes verschiebbaren Kolbenstangen sich über Umlenkrollen gegen jeweils einen zugeordneten Festigkeitsträger abstützen.

Einrichtungen dieser Art sind beispielsweise aus der DE-A-2 254 027 bekannt. Nachdem sich die Bedeutung einer in konstanter Höhe über die gesamte Länge der Herstelleinrichtung in den Festigkeitsträgern sowohl im Stillstand als auch im Verlaufe der Vorschubbewegungen aufrechterhaltenen Zugspannung erwiesen hatte, wird solchen Einrichtungen zum Herstellen hochwertiger Stahlseil-Fördergurte vor anderen, auf kontinuierliche Arbeitsweise beschränkten Herstelleinrichtungen ausschliesslich der Vorzug gegeben. In allen Fällen bilden die auf die einzelnen Festigkeitsträger zusätzlich einwirkenden Spannzylinder einen wichtigen Bestandteil, weil sie in ihrer Gesamtheit die stets unterschiedlichen Längungen der Festigkeitsträger gegeneinander ausgleichen und damit erst die Voraussetzung zum Einstellen einer in allen Festigkeitsträgern gleichmässigen Zugspannung schaffen. Nach allgemein vorherrschenden Anschauungen und allein schon aufgrund logischer Überlegungen musste sich die angestrebte gleichmässige Spannungsverteilung über die Breite der durch die Einrichtung hindurchgeführten Bahn von Festigkeitsträgern hin ohne weiteres Zutun von selbst ergeben, wenn alle Spannzylinder mit Druckmittel aus einer einzigen Quelle beaufschlagt wurden. Die praktischen Erfahrungen mit den bekannten Einrichtungen schienen dies aber zu widerlegen; denn es traten überraschend immer wieder Ungleichmässigkeiten in der Beschaffenheit der fertigen Fördergurte auf, die ganz offenbar auf Spannungsunterschiede in den eingebetteten Festigkeitsträgern zurückzuführen waren. Es ist die Aufgabe der Erfindung, die erwünschte gleichmässige Spannungsverteilung in den Festigkeitsträgern unabhängig von störenden äusseren Einflüssen aufrechtzuerhalten und mittelbar dadurch die Gebrauchstüchtigkeit der hergestellten Fördergurte zu sichern.

Nach der Erfindung werden im Betrieb von Herstelleinrichtungen der eingangs definierten Gattung die Spannzylinder mit einem pulsierenden Druck beaufschlagt, vorzugsweise mit einem mit einer Frequenz zwischen 5 und 20 Hz zwischen einem oberen und einem unteren Wert pulsierenden Druck. Die Erfindung macht sich hierzu die in dem vorliegenden Zusammenhang neuartige und überraschende Erkenntnis von beträchtlichen Unterschieden in den Bewegungswiderständen der einzelnen Spannzylinder zunutze. Wie erst genauere Untersuchungen offenbart haben, folgen die von einem in alle Spannzylinder in gleicher Höhe eingesteuerten druckbeaufschlagten Kolben den mit dem Durchlauf der Festigkeitsträger sich ändernden Spannungsverhältnissen keineswegs gleichmässig und auch durchaus nicht ohne Verzögerung. Besonders nach längerer Stillstandszeit können die Kolben sich derart an der Zylinderwand festgesetzt haben, dass es zum Hervorrufen einer Hubbewegung nur einer extremen Änderung entweder in dem Seildurchhang oder in dem Zylinderinnendruck bedürfte. Mit der erfindungsgemässen pulsierenden Druckbeaufschlagung gelingt es in einfacher und nichtsdestoweniger wirksamer Weise, die Ansprechschwelle der Spannzylinder erheblich zu senken und im Endeffekt damit ihre Funktionstüchtigkeit ungeschmälert zu erhalten.

In praktischer Ausführung des Erfindungsgedankens kann es von Vorteil sein, den im wesentlichen konstanten Druck des Druckmittels in Abhängigkeit von dem Spannungszustand der Festigkeitsträger zum Pulsieren zu bringen, beispielsweise in der Weise, dass das Pulsieren durch Abweichungen der in den Festigkeitsträgern gemessenen Zugspannung von einem Sollwert bewirkt wird.

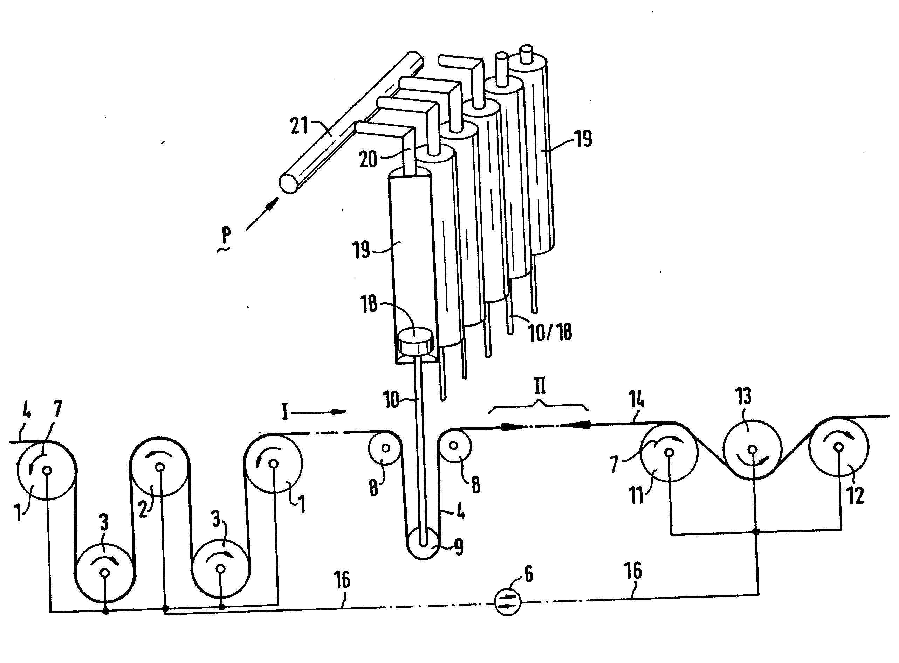

Zum Verdeutlichen der Erfindung ist eine Einrichtung zum Herstellen sogenannter Stahlseil-Fördergurte in der Zeichnung schematisch dargestellt. Die stark vereinfachte Darstellung beschränkt sich auf die Wiedergabe allein der für das Verständnis der Erfindung notwendigen Einzelheiten.

Die gezeichnete Einrichtung enthält zwei ortsfest aufgestellte Reibwalzensätze, die den Ein- und den Ausgangsbereich bezeichnen und die wesentlichen Einrichtungsstationen und Behandlungsvorrichtungen zwischen sich einschliessen. Es sind dies einmal das Mehrfachwalzensystem 1, 2, 3 unmittelbar hinter dem nichtgezeichneten Spulengatter für die Stahldrahtseile und das Dreiwalzensystem 11, 12, 13 im Ausgangsbereich, das sich etwa zwischen der nichtgezeichneten üblichen Vulkanisierpresse und einer ebenfalls nicht weiter dargestellten Aufwikkelstation für die fertigen Fördergurtabschnitte befinden kann. Die als Festigkeitsträger dienenden Stahldrahtseile 4 werden aus dem Spulengatter abgezogen, umschlingen die Reibwalzen 1, 2 3 und laufen in Richtung des Pfeiles I in die mit dem Bezugszeichen II nur angedeutete eigentliche Aufbaueinrichtung ein, wo sie in bekannter Weise in aufeinanderfolgenden Behandlungsschritten mit elastomeren Deckplatten belegt und durch die Vulkanisierpresse hindurchgefördert werden. Die vulkanisierten Gurtabschnitte 14 verlassen die Einrichtung über die Reibwalzen 11, 12, 13 und werden anschliessend auf Vorratstrommeln aufgewickelt. Die beiden Walzensysteme definieren ein die Aufbaueinrichtung II einschliessendes Spannungsfeld, dessen Einwirkung die Stahldrahtseile 4 mit dem Auflaufen auf die Walzen 1, 2, 3 unterworfen werden und das sie erst mit dem Ablaufen des fertigen Gurtes 14 von den Walzen 11, 12, 13 wieder verlassen.

Die Walzen werden im Gleichlauf untereinander angetrieben, was in der Zeichnung mit der Darstellung eines gemeinsamen Elektro- oder Hydraulikmotoraggregates 6 mit Kraftverzweigung 16 angedeutet ist. Zum Aufbringen der erforderlichen Zugspannung auf die Stahldrahtseile 4 werden die Reibwalzen im Sinne der Vektorpfeile 7 angetrieben.

Innerhalb des von den beiden Walzensystemen eingegrenzten Spannungsfeldes durchläuft jedes einzelne Drahtseil 4 eine zusätzliche Spannstation, die die unvermeidlichen, auch durch thermische Vorgänge erzeugten Längendifferenzen ausgleicht und die von den Reibwalzen aufgebrachten Spannungen gleichmässig unter den in einer Kordbahn zusammengefassten Drahtseilen verteilt. Diese Einzelspannstationen, die zweckmässig unmittelbar hinter dem Walzensystem 1, 2, 3 vorgesehen sind, enthalten eine Vielzahl von Einkammer-Spannzylindern 19 mit Kolben 18, deren Kolbenstangen 10 zwischen Umlenkrollen 8 auf- und abbewegliche Spannrollen 9 in frei drehbarer Verbindung tragen. Jedem Drahtseil ist ein eigener Spannzylinder 19 zugeordnet, und die Arbeitskammern der Zylinder oberhalb der Kolben 18 sind über kurze Überströmverbindungen 20 an eine gemeinsame Druckmittelzuleitung 21 angeschlossen. Das Druckmittel, Druckluft oder Drucköl, wird im Sinne des Pfeiles P mit einem zwischen zwei Grenzwerten pulsierenden Druck zugeführt.

Die zwischen den Reibwalzensystemen gespannten Drahtseile 4 bilden zwischen den Umlenkrollen 8 Schleifen von von Seil zu Seil unterschiedlicher und wechselnder Länge. Sie werden entgegen der an allen Spannrollen 9 in gleicher Grösse wirksamen Druckkraft gereckt und finden an der Druckmittelbaufschlagung der Spannkolben 18 ein gemeinsames elastisches Polster.

**Patentansprüche**

1. Verfahren zum Betreiben einer Herstelleinrichtung für Fördergurte (14 aus Gummi oder gummiähnlichen Kunststoffen mit parallel zueinander ohne gegenseitige Berührung in Längsrichtung eingebetteten draht- oder seilartigen Festigkeitsträgern (4), mit die Festigkeitsträger (4) in einem längeren Bereich innerhalb der Einrichtung gemeinsam unter einer Zugspannung haltenden Mitteln (1, 2, 3, 11, 12, 13) und mit einer Vielzahl von zu Eingang dieses Bereiches vorgesehenen mit Druckmitteln beaufschlagbaren Spannzylindern (19), deren unter der Wirkung des Druckmitteldruckes verschiebbaren Kolbenstangen (10) sich über Spannrollen (9) gegen jeweils einen zugeordneten Festigkeitsträger (4) abstützen, dadurch gekennzeichnet, dass die Spannzylinder (19) mit einem pulsierenden Druck beaufschlagt werden.

2. Verfahren nach Anspruch 1, dadurch gekennzeichnet, dass die Spannzylinder (19) mit einem mit einer Frequenz zwischen 5 und 20 Hz zwischen einem oberen und einem unteren Wert pulsierenden Druck beaufschlagt werden.

3. Verfahren nach den Ansprüchen 1 und 2, dadurch gekennzeichnet, dass der im wesentlichen konstante Druck des Druckmittels in Abhängigkeit von dem Spannungszustand der Festigkeitsträger (4) zum Pulsieren gebracht wird.

4. Verfahren nach Anspruch 3, dadurch gekennzeichnet, dass das Pulsieren des Druckmitteldruckes durch Abweichungen der in den Festigkeitsträgern (4) gemessenen Zugspannung von einem Sollwert bewirkt wird.

**Revendications**

1. Procédé de fonctionnement d'une installation de fabrication de courroies transporteuses (14) en caoutchouc ou matières plastiques analogues au caoutchouc, comprenant des éléments résistants (4) du type fils métalliques ou câbles, disposés en étant noyés dans la direction longitudinale, parallèlement entre eux et sans contact mutuel, comprenant des moyens (1, 2, 3, 11, 12, 13) qui maintiennent conjointement les éléments résistants (4) sous une contrainte de tension dans une zone de grande longueur à l'intérieur de l'installation, et une pluralité de vérins de tension (19), prévus à l'entrée de cette zone, et qui peuvent être alimentés en fluide de pression, et dont les tiges de pistons (10), qui peuvent coulisser sous l'action de la pression du fluide de pression, prennent appui chacun sur un élément résistant (4) correspondant par l'intermédiaire d'une poulie de tension (9), caractérisé en ce que les vérins de tension (19) sont alimentés avec une pression pulsatoire.

2. Procédé selon la revendication 1, caractérisé en ce que les vérins de tension (19) sont alimentés avec une pression pulsatoire qui varie entre une valeur supérieur et une valeur inférieure, avec une fréquence comprise entre 5 et 20 Hz.

3. Procédé selon les revendications 1 et 2, caractérisé en ce qu'on imprime à la pression, sensiblement constante, du fluide de pression, une variation pulsatoire en fonction de l'état de tension des éléments résistants (4).

4. Procédé selon la revendication 3, caractérisé en ce que la pulsation de la pression du fluide de pression est commandée par des écarts que la contrainte de tension, mesurée dans les éléments résistants (4) présente par rapport à une valeur de consigne.

**Claims**

1. A method of operating an apparatus for producing conveyor belts formed from rubber or rubber-like plastics materials and comprising wire-like or cable-like reinforcing members (4) which are embedded parallel to one another in the longitudinal direction without any mutual contact, such method using means (1, 2, 3, 11, 12, 13) which keep the reinforcing members (4) in a relatively long region within the apparatus jointly under a tensile stress, and a plurality of tensioning cylinders (19) which are provided at the entrance to this region and are actuatable by pressure medium, the piston rods (10) of such cylinders being displaceable by the effect of the pressures medium pressure and being supported by tensioning rollers against a respective, associated reinforcing member (4), characterised in that the tensioning cylinders (19) are actuated by a pulsating pressure.

2. A method as claimed in claim 1, wherein the tensioning cylinders (19) are actuated by a pressure which pulsates with a frequency of between 5 Hz and 20 Hz between an upper value and a lower value.

3. A method as claimed in claims 1 and 2, wherein the substantially constant pressure of the pressure medium is caused to pulsate in dependence on the stressed state of the reinforcing member (4).

4. A method as claimed in claim 3, wherein the pulsating of the pressure medium pressure is caused by deviations in the tensile stress, measured in the reinforcing members (4), from a desired value.